# EUROPÄISCHE PATENTSCHRIFT

(11) **EP 1 110 018 B1**
(45) Veröffentlichungstag und Bekanntmachung des Hinweises auf die Patenterteilung: **26.11.2003**
(21) Anmeldenummer: 99969139.7
(22) Anmeldetag: 06.09.1999
(51) Int. Cl.: F16K 31/06, F16K 27/00

(54) **ELEKTROMAGNETVENTIL**
ELECTROMAGNETIC VALVE
VALVE ELECTROMAGNETIQUE

(30) Priorität: 10.09.1998 DE 19841333; 05.07.1999 DE 19930969
(43) Veröffentlichungstag der Anmeldung: 27.06.2001
(73) Patentinhaber: Continental Teves AG & Co. oHG, 60488 Frankfurt (DE)
(72) Erfinder: CZARNETZKI, Edwin, D-65604 Elz (DE); VOLZ, Peter, D-64291 Darmstadt (DE)
(86) Internationale Anmeldenummer: EP9906536
(87) Internationale Veröffentlichungsnummer: WO00015988

(56) Entgegenhaltungen:
- DE-A- 3 716 073
- DE-A- 4 221 988
- DATABASE WPI Section Ch, Week 198150 Derwent Publications Ltd., London, GB; Class L03, AN 1981-91654D XP002124175 & JP 56 138580 A (NIKKISO CO LTD ET AL), 29. Oktober 1981 (1981-10-29)
- DATABASE WPI Section Ch, Week 199812 Derwent Publications Ltd., London, GB; Class L03, AN 1998-126591 XP002124176 & JP 10 008219 A (CKD KK ET AL), 13. Januar 1998 (1998-01-13)
- PATENT ABSTRACTS OF JAPAN vol. 014, no. 090 (C-0691), 20. Februar 1990 (1990-02-20) & JP 01 301836 A (HITACHI METALS LTD), 6. Dezember 1989 (1989-12-06)
- DATABASE WPI Section Ch, Week 198115 Derwent Publications Ltd., London, GB; Class L03, AN 1981-26264D XP002124177 & JP 56 016653 A (TOHOKU TOKUSHU KK), 17. Februar 1981 (1981-02-17)
- PATENT ABSTRACTS OF JAPAN vol. 009, no. 108 (C-280), 11. Mai 1985 (1985-05-11) & JP 59 232258 A (SANYOU TOKUSHIYU SEIKOU KK), 27. Dezember 1984 (1984-12-27)
- PATENT ABSTRACTS OF JAPAN vol. 018, no. 325 (M-1625), 21. Juni 1994 (1994-06-21) & JP 06 074357 A (MITSUBISHI ELECTRIC CORP), 15. März 1994 (1994-03-15)

## Beschreibung

Die Erfindung betrifft ein Elektromagnetventil nach dem Oberbegriff des Patentanspruchs 1.

In der gattungsbildenden DE 42 21 988 A1 ist ein Elektromagnetventil beschrieben, das in seiner elektromagnetisch nicht erregten Grundstellung einen Druckmitteldurchlaß zwischen dem Ventilschließglied und dem Ventilsitz aufweist. Das Ventilgehäuse ist aus Automatenstahl gefertigt. Da der gewählte Automatenstahl schlecht schweißbar ist, wird der den Magnetanker umschließende hülsenförmige Gehäuseabschnitt mittels einer Außenverstemmung des Gehäusematerials am Magnetkern gehalten. Ferner besteht der hülsenförmige Gehäuseabschnitt aus einem vom Ventilgehäuse abweichenden, besonders korrosionsbeständigen, austenitischen Werkstoff, um unter allen Umständen die im Ventil-Außenbereich besonders große Korrosionsgefahr zu verringern.

Ferner sind bereits aus den Dokumenten JP 56138580 A, JP 10008219 A, JP 01301836 A und JP 56016653 A für Elektromagnetventile geeignete Werkstoffe bekannt, die aber nur eingeschränkt schweißbar, korrosionsempfindlich, schlecht zerspanbar sind und die die gewünschte Festigkeit häufig nicht aufweisen.

Der vorliegenden Erfindung liegt die Aufgabe zugrunde, ein Elektromagnetventil der bereits bekannten Bauart dahingehend zu verbessern, daß durch einfache, kostengünstige Maßnahmen ein funktionssicheres Elektromagnetventil geschaffen wird, dessen Gehäuse mit dem hülsenförmigen Gehäuseabschnitt gut verschweißbar ist, wobei auch die Anforderungen an eine hohe Korrosionsbeständigkeit, sehr gute Zerspanungseigenschaft sowie hohe mechanische Festigkeit des Ventils für die Großserienfertigung mit möglichst geringen Kosten erfüllt werden sollen.

Diese Aufgabe wird erfindungsgemäß für ein Elektromagnetventil der gattungsbildenden Art durch die kennzeichnenden Merkmale des Patentanspruchs 1 gelöst.

Weitere Merkmale und Vorteile der Erfindungen gehen im nachfolgenden aus den Unteransprüchen und der Beschreibung mehrerer Ausführungsbeispiele hervor, die nachfolgend anhand von Zeichnungen erläutert werden.

Es zeigen:
- Fig. 1: ein in der Grundstellung elektromagnetisch nicht erregtes, offenes Elektromagnetventil,
- Fig. 2: eine zweckmäßige Korrosionsschutzmaßnahme in Form einer Schrumpfschlauchmontageeinheit für mehrere an einem Aufnahmekörper angeordnete Elektromagnetventile,
- Fig. 3: eine alternative Anwendung der Erfindung für ein in Grundstellung elektromagnetisch nicht erregtes, geschlossenes Elektromagnetventil.

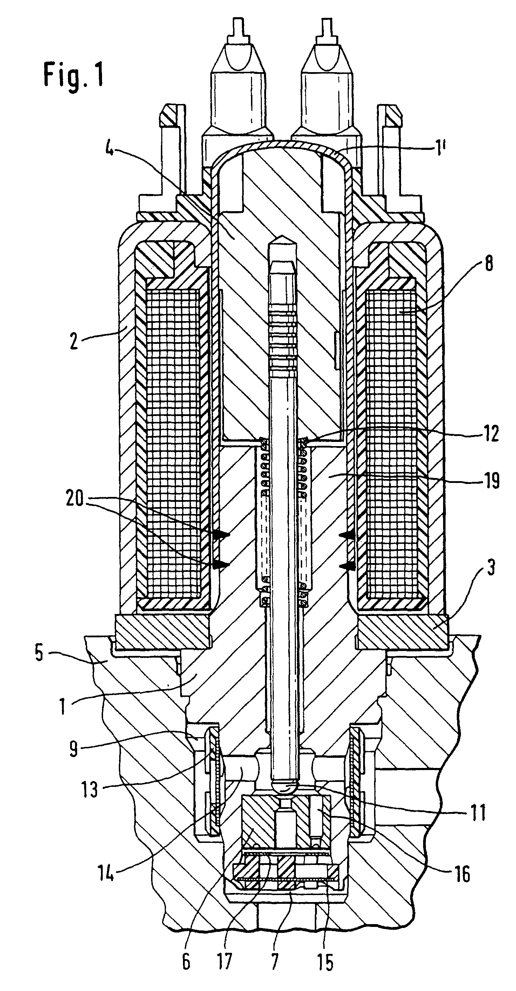

Die Fig. 1 zeigt in erheblich vergrößerter Darstellung die konstruktiven Einzelheiten eines in der Grundstellung elektromagnetisch nicht erregten, in Offenstellung befindlichen Elektromagnetventils. Das Ventilgehäuse 1 ist als Kaltschlagteil ausgeführt und besteht beispielsweise aus einer Legierung X6CrMoS17 oder alternativ aus X14CrMoS17, wobei der Kohlenstoffgehalt der Legierung vom Betrag her kleiner oder gleich 0,2% ist, um einerseits die automatengerechte Zerspanbarkeit zu begünstigen, andererseits aber die Korrosionsbeständigkeit möglichst wenig zu beeinträchtigen. Bei beiden Werkstoffen handelt es sich um großseriengerechte, für einen Magnetkreis geeignete, hochlegierte Stähle, die nicht nur korrosionsbeständig sind, sondern auch bei sehr geringen Material- und Fertigungskosten die notwendige mechanische Festigkeit und eine besonders gute Zerspanungseigenschaft aufweisen und die für eine Laserschweißung gut geeignet sind. Die chemische Zusammensetzung des Werkstoffs darf deshalb folgende prozentuale Massenanteile nicht überschreiten: Kohlenstoffanteil maximal 0.08%, Siliziumanteil maximal 1%, Mangan maximal 1%, Phosphor maximal 0,045%. Ferner müssen auch die Massenanteile von Schwefel zwischen 0,2% bis 0,35% und für Chrom 16% bis 18% sowie für Molybdän 0,2% bis 0,6% in der Legierung betragen.

Das Ventilgehäuse 1 ist überdies in Patronenbauweise ausgeführt und mittels einer Verstemm- oder auch Scherbefestigung in einer abgestuften Aufnahmebohrung eines Aufnahmekörpers 5 (Ventilblock) gehalten. Der Aufnahmekörper 5 besteht im vorliegenden Beispiel aus einem weicheren Werkstoff als der Werkstoff des Elektromagnetventils, um das vorzugsweise aus einer Leichtmetallknetlegierung bestehende Werkstoffvolumen des Aufnahmekörpers 5 zur Ventilbefestigung in Richtung des mit einer Hinterschneidung versehenen Stufenabschnitts 9 am Ventilgehäuse 1 zu verdrängen. Dies schließt jedoch nicht die Verwendung der erfindungswesentlichen Teile des vorgeschlagenen Elektromagnetventils für eine alternative Befestigungsart in einem beispielsweise aus Stahl gefertigten Aufnahmekörper 5 aus.

Der eingangs genannte Werkstoff für das Ventilgehäuse 1, den Jochring 2 und den Magnetanker 4 ist entsprechend den Anforderungen magnetflußleitend, wobei der Magnetkreis zwischen Jochring 2 und dem Ventilgehäuse 1 entweder über ein am Ventilgehäuse 1 angebrachtes, ferromagnetisches Ringteil und/oder über einen das Ventilgehäuse 1 tragenden ferromagnetischen Aufnahmekörper 5 hergestellt werden kann.

Bei näherer Betrachtung des Ventils nach Fig. 1 zeigt sich, daß das Ventilgehäuse 1 an der vom hülsenförmigen Gehäuseabschnitt 1' entfernt gelegenen Stirnfläche eine an den Ventilsitzkörper 6 im Durchmesser angepaßte Öffnung 7 aufweist, in der der Ventilsitzkörper 6 spielfrei eingefügt ist. Die Tiefe der an den Nenndurchmesser des Ventilsitzkörpers 6 angepaßten Öffnung 7 ist in jedem Fall größer gewählt, als die Dicke des Ventilsitzkörpers 6, damit bei Bedarf ein gewünschtes Einjustieren des Ventilsitzkörpers in der Öffnung 7 gewährleistet werden kann. Das Ventilgehäuse 1 weist im Bereich des Stufenabschnitts 9 im Aufnahmekörper 5 die Kontur eines hohlzylinderförmigen, in Richtung des Aufnahmekörpers 5 geöffneten Drehteils auf, an das sich zur Aufnahme des einseitig geschlossenen, hülsenförmigen Gehäuseabschnitts 1' ein im Außendurchmesser verkleinerter, zylindrischer Fortsatz in der Funktion eines Magnetkerns 19 anschließt, der sich bis in die Ventilspule 8 erstreckt. Der hülsenförmige Gehäuseabschnitt 1' ist domförmig geschlossen und vorzugsweise im Tiefziehverfahren aus dem eingangs erwähnten, hochlegierten Stahl hergestellt. Der Gehäuseabschnitt 1' ist als Schweißverbindung am Magnetkern 19 druckmitteldicht befestigt. Erfindungsgemäß wird hierzu für den hülsenförmigen Gehäuseabschnitt 1' eine austenitische Stahllegierung mit einem maximalen Massengehalt, der für Kohlenstoff 0,06%, Silizium 1%, Mangan 2%, Schwefel 0,015% und Stickstoff 0,11% betragen darf. Für Chrom bewegt sich der Massenanteil zwischen 17% bis 18% an der Legierung, während für Nickel 11% bis 13% zulässig sind. Der Phosphoranteil darf bis zu 0,045% an der Stahllegierung betragen. Demnach ist beispielsweise ein Stahl mit der Bezeichnung X4CrNi18-12 für die Herstellung des hülsenförmigen Gehäuseabschnitts 1' verwendbar. Die Kombination der beschriebenen prozentualen Anteile der Elemente in der resultierenden Legierung erfüllt überdies die Anforderung an eine besonders gute Laserschweißbarkeit.

Zur Verbesserung des Korrosionsschutzes und damit zum Schutz des Schweißnahtbereichs wird die Schweißnaht 20 vorzugsweise als Doppelschweißnaht am Gehäuseabschnitt 1' angeordnet, so daß jeweils die dem Korrosionseinfluß ausgesetzte Schweißnaht die Funktion einer sog. Opfernaht übernimmt.

Ferner ist der Abbildung nach Fig. 1 zu entnehmen, daß der innerhalb des hülsenförmigen Gehäuseabschnitts 1' beweglich angeordnete Magnetanker 4 im domförmigen Endbereich des Gehäuseabschnitts 1' auf Anschlag steht, während gleichzeitig das an einem Stößel angeformte kugelförmige Ventilschließglied 11 in seiner elektromagnetisch nicht erregten, offenen Schaltstellung entfernt vom Ventilsitzkörper 6 verharrt. Für die vorbezeichnete Grundstellung ist am stößelförmigen Abschnitt des Ventilschließgliedes 11 eine Druckfeder 12 befestigt, die sich mit ihrem einen Ende in der Bohrung des als Magnetkern 19 ausgeführten Fortsatzes und mit ihrem anderen Ende am Magnetanker 4 abstützt.

Schließlich sollen im nachfolgende noch einige Details zu der Ausführungsform des Ventils nach Fig. 1 nachgetragen werden. Dies sind im einzelnen die Anordnung eines Ringfilters 13, der sich oberhalb des Ventilsitzkörpers im Mittelabschnitt der Öffnung 7 des Ventilgehäuses 1 auf Höhe eines druckmittelführenden Querkanals 14 befindet. Ferner befindet sich unterhalb des Ventilsitzkörpers 6 ein in die Öffnung eingelassener Plattenfilter 15. Zwischen dem Plattenfilter 15 und einem den Ventilsitzkörper 6 durchdringenden Bypasskanal 16 ist ein Plattenrückschlagventil 17 angeordnet. Selbstverständlich kann anstelle des Plattenrückschlagventils 17 auch ein Kugelrückschlagventil verwendet werden. Weiterhin ist der Abbildung zu entnehmen, daß der im Aufnahmekörper 5 anliegende Endbereich des Ventilgehäuses 1 schneidenförmig angefast ist, so daß beim Einpreßvorgang des Ventilgehäuses 1 der Schneidenabschnitt zum Zwecke einer guten Dichtwirkung in dem Bohrungsgrund des Aufnahmekörpers 5 eindringt.

Die für das Ventilgehäuse 1 und den Gehäuseabschnitt 1' erfindungsgemäß verwendeten und je nach Ausführungsbeispiel miteinander verschweißten Werkstoffe, zum Beispiel X6CrMoS17, X14CrMoS17 bzw. X4CrNi18-12, können zusätzlich zur Verbesserung der Korrosionsbeständigkeit an der Oberfläche bei Bedarf gefettet, gewachst oder lackiert werden, was mit kostengünstigen, einfachen Mitteln in der Serienfertigung erfolgen kann.

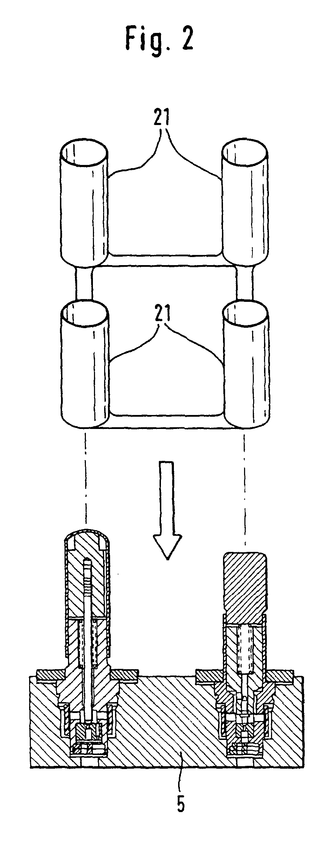

Eine ergänzende Korrosionsschutzmaßnahme für die Ventil-Außenfläche stellt die Verwendung eines sog. Schrumpfschlauches 21 nach Fig. 2 dar, der als vorgefertigte Montageeinheit für mehrere Elektromagnetventile gleichzeitig an den hülsenförmigen Gehäuseabschnitten 1' bis hin zur Überdeckung der korrosionsempfindlichen Schweißnaht 20 aufgestülpt werden kann. Dies hat den Vorteil, daß auf die erwähnte Doppelschweißnaht verzichtet werden kann. Der Schrumpfschlauch 21 läßt sich vorteilhafterweise aus einem Polymer oder Elastomer unter Wärmeeinfluß vakuumdicht auf jeden hülsenförmigen Gehäuseabschnitt 1' aufschrumpfen. Eine zusätzliche innenseitige Benetzung oder Beschichtung des Schrumpfschlauches mit einem geeigneten Korrosionsschutzmittel stellt eine ergänzende Korrosionsschutzmaßnahme dar. Die Fig. 2 zeigt hierzu eine zweckmäßige, eigenständig handhabbare Schrumpfschlauchmontageeinheit in Form einer Vierergruppe, die in ihren Abmessungen an die Ventilkonfiguration im Aufnahmekörper 5 angepaßt und mittels an die Schrumpfschläuche 21 angespritzter Abstandshalter vor der Montage zu einem Quadrat ausgerichtet ist.

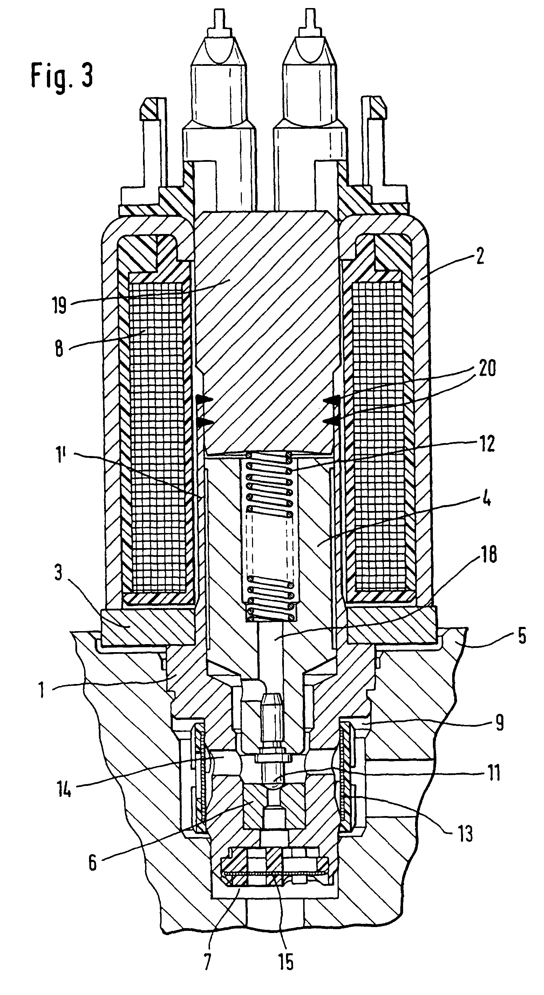

Das nachfolgend beschriebene Elektromagnetventil gemäß Fig. 3 zeigt in vielen Einzelmerkmalen einen zu dem Ventil nach Fig. 1 vergleichbaren Aufbau, weshalb im nachfolgenden lediglich auf die Unterschiede des nunmehr beschriebenen Elektromagnetventils nach Fig. 3 Bezug genommen wird. In der abbildungsgemäßen, geschlossenen Grundstellung des Elektromagnetventils verharrt das mittels Selbstverstemmung mit dem Magnetanker 4 verbundene Ventilschließglied 11 unter Wirkung einer Druckfeder 12 am Ventilsitzkörper 6. Das als Kaltschlagteil ausgeführte Ventilgehäuse 1 ist gleichfalls mittels einer Laserschweißung mit dem als Stopfen dargestellten, ebenso als Kaltschlagteil ausgeführten Magnetkern 19 derart verbunden, daß ein möglichst dünnwandiger Übergangsbereich in Form des Gehäuseabschnitts 1' verbleibt. Dieser Übergangsbereich ist hinsichtlich seiner Wandstärke auf ein notwendiges Festigkeitsmaß des Elektromagnetventils begrenzt, um in diesem Bereich die magnetischen Verluste möglichst gering zu halten. Um das sog. Magnetankerkleben nach elektromagnetischer Erregung zu verhindern, weist die vom Ventilschließglied 11 abgewandte Stirnfläche des Magnetankers 4 oder alternativ dazu der Magnetkern 19, eine konkave Form auf, womit sich ohne die Notwendigkeit zum Einfügen einer Einlegescheibe eine luftspaltorientierte Ankerstirnfläche ergibt. Ein etwaiger Druckmittelaustausch zwischen dem Bereich außerhalb und innerhalb des Magnetankers 4 wird mittels einer Druckausgleichsbohrung 18 möglichst zentral im Magnetanker 4 geführt, ohne daß eine bisher verwendete, die Magnetkraft ungünstig beeinflussende Druckausgleichsnut am Umfang des Magnetankers 4 erforderlich ist. Die Bewegung des Magnetankers 4 ist bei Tieftemperaturbetrieb des Druckmittels erheblich verbessert. Auch die konische Ausbildung der Ankerstirnfläche begünstigt die Druckmittelverteilung im Bereich des Magnetankers 4. Gut zu erkennen ist auch die doppelt ausgeführte Schweißnaht 20, wobei die obere Schweißnaht 20 zur Vermeidung von Spaltkorrosion am Ende des hülsenförmigen Gehäuseabschnitts 1' mit dem Magnetkern 19 verbunden ist.

Das nach Fig. 3 dargestellte, in der Grundstellung geschlossene Elektromagnetventil zeichnet sich durch eine besonders einfache Konstruktion, insbesondere im Hinblick auf die flaschenförmige, einteilige Kontur des Ventilgehäuses 1 mit dem Gehäuseabschnitt 1', wobei ebenso wie beim Gegenstand nach Fig. 1 durch die Verwendung von hochlegierten Stählen der Klassifikation X6CrMoS17 oder alternativ dazu X14CrMoS17 für das Ventilgehäuse 1 und den Gehäuseabschnitt 1' beste Zerspanungseigenschaften und Laserschweißbarkeit bei geringen Materialkosten in der Großserie gewährleistet sind.

Das Elektromagnetventil nach Fig. 3 kann infolge der Identität wesentliche, bereits aus der Beschreibung des Elektromagnetventils nach Fig. 1 hervorgegangene Elemente analog dazu die bestehenden Vorteile nutzen. Auch wenn nicht alle aus der Beschreibung von Figur 1 bekannten erfindungswesentlichen- und unwesentlichen Einzelheiten bisher zur Ausführungsform nach Figur 3 angegeben wurden, sind diese uneingeschränkt auf Figur 3 übertragbar.

Zusammenfassend läßt sich somit festhalten, daß durch die zweckmäßige Auswahl neuer Ventilwerkstoffe, die Anwendung geeigneter, bereits eingangs beschriebener Korrosionsschutzmaßnahmen und die Verwendung einer Laser-Schweißverbindung überraschende Verbesserungen seitens der Ventiltechnik erzielt werden, die für die kostengünstige Großserienfertigung alle erforderlichen Ventileigenschaften, wie gute Schweißbarkeit, sehr gute Zerspanung, gute Korrosionsbeständigkeit und hohe mechanische Festigkeit für den Gehäusebereich miteinander vereinigen.

### Bezugszeichenliste

- 1: Ventilgehäuse
- 1': Gehäuseabschnitt
- 2: Jochring
- 3: Ringteil
- 4: Magnetanker
- 5: Aufnahmekörper
- 6: Ventilsitzkörper
- 7: Plattenventil
- 8: Ventilspule
- 9: Stufenabschnitt
- 10: Anfasung
- 11: Ventilschließglied
- 12: Druckfeder
- 13: Ringfilter
- 14: Druckmittelbohrung
- 15: Plattenfilter
- 16: Bypasskanal
- 17: Plattenrückschlagventil
- 18: Druckausgleichsbohrung
- 19: Magnetkern
- 20: Schweißnaht
- 21: Schrumpfschlauch

## Patentansprüche

1. Elektromagnetventil, bestehend aus einem Gehäuse (1) und einem hülsenförmigen Gehäuseabschnitt (1'), mit einem im Gehäuse (1) geführten Ventilschließglied (11), das mittels eines von einer Ventilspule (8) betätigten, an einem Magnetkern (19) anlegbaren Magnetankers (4) eine Ventilsitzöffnung im Gehäuse (1) freigibt oder verschließt, wobei das Gehäuse (1) oder ein Teil des Gehäuses (1) durch zerspanende Bearbeitung aus einem Automatenstahl hergestellt ist, **dadurch gekennzeichnet, daß** das Gehäuse (1) und der Magnetkern (19) einen Werkstoff mit gleichen hochlegierten Bestandteilen von Chrom und Molybdän aufweisen, wobei das Gehäuse (1) und der Magnetkern (19) entweder aus einer Legierung X6CrMoS17 oder X14CrMoS17 bestehen, und daß der Werkstoff des hülsenförmigen Gehäuseabschnitts (1') entweder aus einer Chrom-Nickel-Legierung oder einer hochlegierten Chrom-Molybdän-Verbindung besteht.

2. Elektromagnetventil nach Anspruch 1, **dadurch gekennzeichnet, daß** ein Kohlenstoffgehalt in der Legierung des für das Gehäuse (1) und den Magnetkern (19) verwendeten Werkstoffs kleiner oder gleich 0,2 Massenprozent beträgt.

3. Elektromagnetventil nach Anspruch 1, **dadurch gekennzeichnet, daß** ein Schrumpfschlauch (21) den hülsenförmigen Gehäuseabschnitt (1') umschließt.

4. Elektromagnetventil nach Anspruch 1, **dadurch gekennzeichnet, daß** ein Schrumpfschlauch (21) zumindest eine den Magnetkern (19) mit dem Gehäuseabschnitt (1') verbindender Schweißnaht (20) abdeckt.

5. Elektromagnetventil nach Anspruch 3 oder 4, **dadurch gekennzeichnet, daß** der Schrumpfschlauch (21) aus einem Polymer oder Elastomer besteht.

6. Elektromagnetventil nach einem der vorhergehenden Ansprüche 3 bis 5, **dadurch gekennzeichnet, daß** der Schrumpfschlauch (21) unter Wärmeeinfluß vakuumdicht zumindest auf der Schweißnaht (20) oder darüber hinausreichend auf dem hülsenförmigen Gehäuseabschnitt (1') aufgeschrumpft ist.

7. Elektromagnetventil nach einem der vorhergehenden Ansprüche 3 bis 6, **dadurch gekennzeichnet, daß** der Schrumpfschlauch (21) an seiner Innenseite eine Benetzung oder Beschichtung mit einem geeigneten Korrosionsschutzmittel aufweist.

8. Elektromagnetventil nach Anspruch 1, **dadurch gekennzeichnet, daß** das Gehäuse (1, 1') und der Magnetkern (19) mit einer Wachs-, Lack- oder Fettschicht überzogen sind.

## Claims

1. Electromagnetic valve, comprised of a housing (1) and a sleeve-shaped housing portion (1'), including a valve closure member (11) guided in the housing (1) and opening or closing a valve seat opening in the housing (1) by means of a magnet armature (4) which is operated by a valve coil (8) and movable into abutment on a magnetic core (19), wherein the housing (1) or part of the housing (1) is made by machining from free-cutting steel,
**characterized in that** the housing (1) and the magnetic core (19) are made of a material of identical high-alloyed chromium and molybdenum constituents, with the housing (1) and the magnetic core (19) being made of an X6CrMoS17 or X14CrMoS17 alloy, and **in that** the material of the sleeve-shaped housing portion (1') is either a chromium-nickel alloy or a high-alloyed chromium-molybdenum compound.

2. Electromagnetic valve as claimed in claim 1,
**characterized in that** a carbon content in the alloy of the material used for the housing (1) and the magnetic core (19) is lower than or equal to 0.2% percentage by mass.

3. Electromagnetic valve as claimed in claim 1,
**characterized in that** a heat-shrinkable sleeve (21) encompasses the sleeve-shaped housing portion (1').

4. Electromagnetic valve as claimed in claim 1,
**characterized in that** a heat-shrinkable sleeve (21) covers at least one weld seam (20) which connects the magnetic core (19) to the housing portion (1').

5. Electromagnetic valve as claimed in claim 3 or 4,
**characterized in that** the heat-shrinkable sleeve (21) is made of a polymer or an elastomer.

6. Electromagnetic valve as claimed in any one of the preceding claims 3 to 5,
**characterized in that** the heat-shrinkable sleeve (21) is shrunk under the influence of heat in a vacuum-tight manner at least onto the weld seam (20) or, in addition, onto the sleeve-shaped housing portion (1').

7. Electromagnetic valve as claimed in any one of the preceding claims 3 to 6,
**characterized in that** the heat-shrinkable sleeve (21) on its inside has a wetting or coating with an appropriate corrosion protective agent.

8. Electromagnetic valve as claimed in claim 1,
**characterized in that** the housing (1, 1') and the magnetic core (19) are coated with a wax, lacquer or grease layer.

## Revendications

1. Electrovanne, constituée d'un boîtier (1) et d'une partie de boîtier en forme de douille (1'), comportant un obturateur d'électrovanne (11 ) qui est guidé dans le boîtier (1) et qui, au moyen d'une armature mobile (4) pouvant être actionnée par une bobine d'électrovanne (8) et pouvant être appliquée sur un noyau magnétique (19), libère ou obture une ouverture de siège d'électrovanne ménagée dans le boîtier (1 ), le boîtier (1) ou une partie du boîtier (1) étant réalisé en un acier de décolletage par usinage par enlèvement de copeaux, **caractérisée en ce que** le boîtier (1) et le noyau magnétique (19) comprennent une matière ayant les mêmes constituants fortement alliés de chrome et de molybdène, le boîtier (1) et le noyau magnétique (19) étant constitués d'un alliage soit X6CrMoS17, soit X14CrMoS17, et **en ce que** la matière de la partie de boîtier en forme de douille (1') est constituée soit d'un alliage chrome-nickel, soit d'un composé fortement allié chrome-molybdène.

2. Electrovanne suivant la revendication 1, **caractérisée en ce que** la teneur en carbone dans l'alliage de la matière utilisée pour le boîtier (1) et le noyau magnétique (19) est inférieure ou égale à 0,2 pour cent en masse.

3. Electrovanne suivant la revendication 1, **caractérisée en ce qu'**un tube rétractable (21) entoure la partie de boîtier en forme de douille (1').

4. Electrovanne suivant la revendication 1, **caractérisée en ce qu'**un tube rétractable (21) recouvre au moins un cordon de soudure (20) rendant le noyau magnétique (19) solidaire de la partie de boîtier (1').

5. Electrovanne suivant la revendication 3 ou 4, **caractérisée en ce que** le tube rétractable (21) est constitué d'un polymère ou d'un élastomère.

6. Electrovanne suivant l'une des revendications précédentes 3 à 5, **caractérisée en ce que** le tube rétractable (21) est posé d'une manière rétractée d'une façon étanche au vide, sous l'influence de la chaleur, au moins sur le cordon de soudure (20) ou, en s'étendant au-delà de celui-ci, sur la partie de boîtier en forme de douille (1').

7. Electrovanne suivant l'une des revendications précédentes 3 à 6, **caractérisée en ce que**, sur sa face intérieure, le tube rétractable (21) comporte une imprégnation ou un revêtement au moyen d'un agent anti-corrosion convenable.

8. Electrovanne suivant la revendication 1, **caractérisée en ce que** le boîtier (1, 1') et le noyau magnétique (19) sont revêtus d'une couche de cire, de laque ou de graisse.
